# EUROPEAN PATENT APPLICATION

(11) **EP 2 399 704 A1**
(43) Date of publication of application: **28.12.2011**
(21) Application number: 10166881.2
(22) Date of filing: 22.06.2010
(51) Int. Cl.: B23K 33/00

(54) **Method for welding metallic blades**

(71) Applicant: Solvay SA, 1050 Brussels (BE)
(72) Inventor: Vandewattyne, Pascal, 1440, Braine-le-Château (BE); Dumongh, Vivian, 6181, Gouy-lez-Piéton (BE)
(74) Representative: Gilliard, Pierre

(57) **Abstract**

Rotating device comprising a blade (2) welded to a shroud (3), wherein :
- said blade is provided with a profiled contact extremity (1), resulting in a reduced contact zone (6) able to contact the shroud;
- said shroud is provided with a recess (4), the recess comprising a recess contact zone (5) surrounded by a lateral access zone (7), the area of the recess contact zone (5)of the shroud being adapted to the reduced contact zone (6) of the blade, the blade reduced contact zone contacting the shroud recess contact zone along a resulting contact zone (8);
- filler metal is present along at least part of the resulting contact zone (8) and the blade is welded to the shroud along at least 10% of the resulting contact zone.

## Description

The invention concerns a method for welding metallic blades, subjected to high stresses, to their support as for instance blades of high speed rotating devices such as wheels, impellers, propellers, .... It concerns particularly a method for the fillet welding of blades to shrouds of rotating devices used in machines like pumps and compressors. It concerns also liquid ring compressors comprising impellers produced by such methods.

Welding together of metallic pieces placed approximately perpendicularly to each other is usually performed by fillet welding. In this technique, fused filler metal, produced for instance by arc welding, is deposited at the corner of the perpendicular angle formed by the two pieces to be welded.

When the welded pieces are subjected to high mechanical stresses during their service, a particular attention has to be brought on the quality of the weld. At the same time, precise positioning of the welded pieces, before, during and after the welding process has to be safeguarded.

In US4097716 is disclosed a method for welding an abutting part of a first metal member to the surface of a second metal member, wherein alternating lands and slots are formed at the abutting extremity of the first metal member. In this method, the welding material is able to penetrate into the slots, which imparts an improved strength to the joint. While allowing a safe positioning of the vertical part thanks to the lands parts, this method has the disadvantage that the penetration of the fillet weld is not homogeneous, since it is improved only in the slot zones.

In W02008/008560, is disclosed a dual fillet welding method wherein both fillet welds are formed concurrently on opposite sides of the joint. In this known method, which uses two electrodes coupled to two separate electric power generators, the emphasis is given on the control of the electric parameters, in order to synchronize the waveforms produced by the two generators. This process allows producing fillet welds with improved and balanced penetration. However, the positioning of the parts to be welded can be problematic, particularly in the embodiments wherein the fillet weld penetrates deeply in the joint.

In US5383593, a method for assembling a disk provided with wings is disclosed, wherein the disk and blades are positioned on a rotating template. The template is rotated so as to place the wings successively in front of a beam of energy to perform the weld. This method, while enabling a precise positioning of the parts is however time consuming.

The invention aims at providing a welding method suitable to the welding of blades on shrouds subjected to high mechanical and/or thermal stresses imparting high strength and precise positioning to the welding joint.

Consequently, the invention concerns a method for welding a blade (2) to a shroud (3) of a rotating device, comprising:
- providing a profiled contact extremity (6) in said blade, resulting in a reduced contact zone able to contact the shroud;
- providing a recess (4) in the shroud, the recess comprising a recess contact zone (5) surrounded by a lateral access zone (7), the area of the recess contact zone (5) being adapted to the reduced contact zone (6);
- introducing the profiled contact extremity of the blade into the recess and contacting the reduced contact zone with the recess contact one, in order to form a resulting contact zone (8);
- fillet welding together the blade and the shroud by introducing fused filler metal in the lateral access zone in conditions such that a welding joint is formed along at least 10% of the area of the resulting contact zone (8).

In this method, by blade is understood any part of the rotating device, oriented substantially radially, for instance formed by processing a plate, having a characteristic dimension at least 3 times, preferably at least 5 times, more preferably at least 10 times its thickness. The characteristic dimension is half the square root of its external surface. The characteristic dimension is generally greater than 1 cm, preferably greater than 5 cm. The invention is generally suitable for blades having a characteristic dimension advantageously up to 5 meters, in particular up to 2 meters. Vanes, f.i. impeller, propeller, fan or rotor vanes fall for instance into this definition. The invention is particularly adapted to the situations wherein the blades have a mechanical action on the fluid wherein they are embed. By shroud is meant any part located at the extremity of the blades, oriented substantially circumferencially and intended to strengthen the rotating device structure and/or to guide the embedding fluid through the device. End plates, rings, side plates, end flanges or side flanges fall into this definition. At the contact zone, blades and shrouds form usually a "T" joint (in a "T" joint, both pieces are oriented substantially perpendicularly to each other).

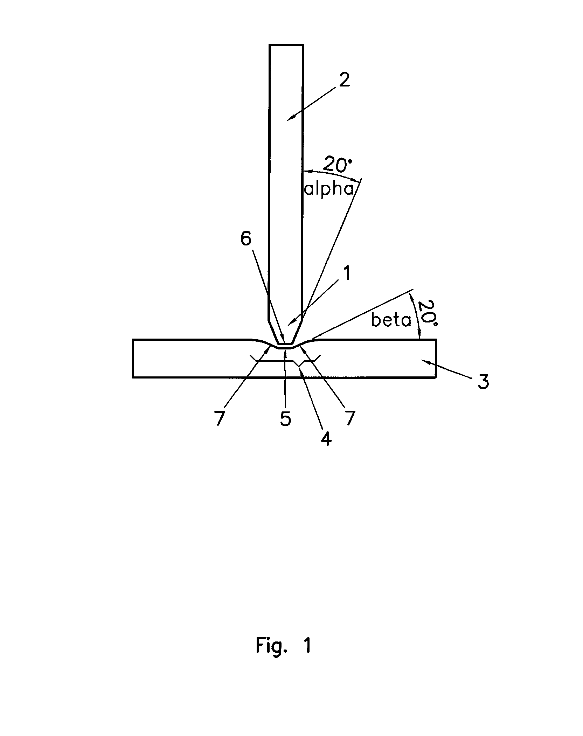

According to a first essential feature of the invention, a profiled contact extremity is provided in the blade. By profiled contact extremity is meant that the shape of this extremity of the blade is such that the surface of the contact zone is reduced compared to the surface of the cross section of the blade just outside the profiled part. The surface reduction amounts generally to at least 5%, usually at least 10%, particularly at least 20%, more particularly at least 30%, in some instances at least 40%. The surface reduction is generally less than 95%, usually less than 90%, particularly less than 80%, more particularly less than 70%, in some instances less than 60%. This surface reduction is generally achieved through a converging angle alpha of at least 10°, usually at least 15°, particularly at least 20°, as represented in figure 1, leading to a thickness reduction generating the recommended surface reductions mentioned here above. It is recommended that the converging angle alpha is less than 45°.

According to a second essential feature of the invention, a recess is provided in the shroud, wherein the profiled contact extremity of the blade can penetrate. The recess comprises two parts.

The first part, which is the recess contact zone, is the deepest and is designed to contact the blade. The depth of the recess in the contact zone is generally at least 0.1, usually at least 0.2, particularly at least 0.25, more particularly 0.3 times the reduced thickness of the blade at its profiled extremity. It is recommended that the depth does not exceed 1.5, usually 1.25, particularly 1.1, times the reduced thickness. The area and shape of the recess contact zone must be adapted to those of the reduced contact zone of the blade, in order to allow a perfect contact between them when the profiled extremity of the blade is introduced into the recess. In practise, the area of the recess contact zone is usually comprised between 1.5 and 1.01, in particular between 1.25 and 1.05 times the area of the reduced contact zone, in order to have some tolerance in the positioning of the blade relative to the shroud.

The second part of the recess is the lateral access zone. This zone, which is positioned around the recess contact zone, is designed to allow the welding equipment to approach easily the bottom of the recess, and to allow fused filler metal to approach it more easily. This lateral access zone has usually a profiled shape, its cross section diminishing as a function of the depth when moving toward the bottom of the recess. In this embodiment, it is advantageous that the lateral side of the recess makes an angle relative to the surface of the shroud just outside the recess (see figure 1). This angle, beta, is preferably less than 70°, more preferably less than 50°, and most preferably less than 30°. Values of at least 10°, preferably 15° are nevertheless recommended.

In the method according to the invention, the profiled contact extremity of the blade is introduced into the recess and the reduced contact zone of the blade contacts the recess contact zone. Thanks to the relative dimensions of both contact zones and thanks to the lateral access zone, the positioning of the blade relatively to the shroud is made safe, precise and easy.

After contacting the blade with the shroud, fused filler metal is introduced in the lateral access zone, which penetrates and can approach more easily the resulting contact zone. This penetration allows forming a secure joint along at least part of the borders of the resulting contact zone. The joint welds together the blade and the shroud along at least 10%, preferably 15% of the area of the resulting contact zone. The formation of the joint results on one side from the welding action of the filler metal itself and/or, on the other side, from the transfer of heat from the welding equipment and the fused filler metal to the metal constituting the blade and the shroud at the resulting contact zone. This transfer of heat melts at least partly said metal, resulting in a weld extending further than the penetration depth of the filler metal itself

When the shape of the lateral access zone is profiled, the flow of the fused filler metal naturally converges towards the contact zone.

When the rotating device is designed for particularly demanding uses, it is recommended that the fused filler metal is introduced in the lateral access zone in conditions such that the joint is formed along a significant part of the area of the resulting contact zone.

In preferred embodiments, the joint is formed along advantageously at least 25%, preferably at least 50%, more preferably at least 75%, particularly preferably at least 90%, most preferably essentially 100% of the area of the resulting contact zone. In those embodiments wherein the penetration of the filler metal is progressively increased up to complete joint formation, the strength of the joint is correspondingly improved. At 100% joint formation, both sides of the resulting contact zones are completely welded together. The amount of joint formation can be assessed by ultrasonic testing.

The total quantity of fused filler metal can be introduced in one step. It is however generally recommended to apply it through successive steps. Sequences of 2 to 10, preferably from 3 to 6 successive welding steps are preferred.

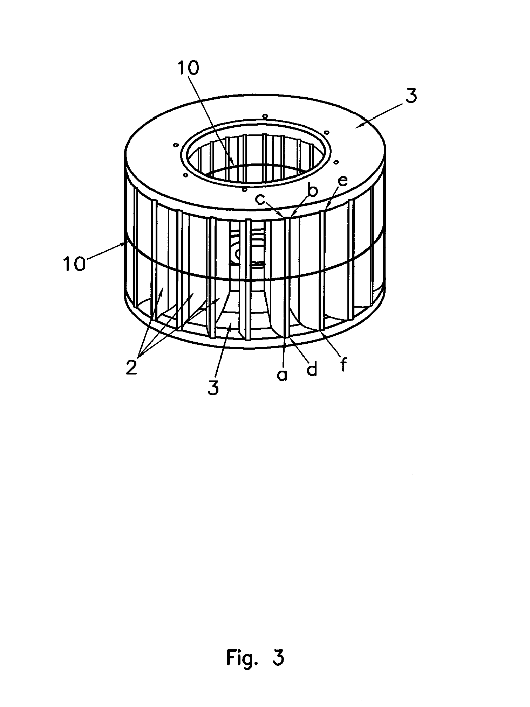

During welding, the resulting contact zone can be subjected to significant thermal stresses. Those stresses could induce in some situations residual internal stresses in the material adjacent to the joint. In particular, when both extremities of the blades are welded to a separate shroud, it is recommended to introduce the filler metal at both sides of each blade and at both extremities in a diagonal alternation, which reduces the thermal stresses and the possible resulting warpage of the device, created by the welding, For example, for a blade having left/right sides and upper/lower extremities, filler metal is advantageously introduced in the following order: lower left - upper right- upper left - lower right. The reverse is then performed for the next blade. An example of such sequence is illustrated in figure 3. All the blades receive preferably the first welding step before beginning the second step.

In order to further reduce the possible internal stresses in the rotating device, it is recommended in some instances to submit the rotating device, after welding, to a thermal treatment at a temperature sufficient to relax the stresses and at cooling rates avoiding their reinstatement. The precise temperature ranges depend on the metal used for the realization of the device. The device is indeed realized essentially in metal (essentially meaning that some parts, non subjected to high stresses, could be realised in another material), for instance in titanium, nickel alloys, aluminium, steel. The device is realised preferably in carbon or stainless steel. When the device is realized in carbon steel or stainless steel, it is usually recommended to perform the thermal treatment at a temperature of at least 500°C, generally at least 600°C, during at least 2 hours, generally at least 3 hours, with a subsequent cooling to a temperature usually lower than 300°C, in particular lower than 250°C, at a rate lower than 100°C per hour, in some instances lower than 75°C per hour. During this thermal treatment, the device is preferably warmed up to the thermal treatment temperature at a speed lower than 500°C per hour. The mentioned temperatures and temperature change rates are those of the air in the oven wherein the device is placed during heat treatment.

Thanks to the method according to the invention, extremely strong joints can be formed, which allow to produce rotating devices able to function at high rotating speeds for long periods of time. The presence of a recess in the shroud permits also an easy positioning of the blade on the shroud before and during welding.

The invention also concerns rotating devices obtainable by the method according to the invention and its different embodiments.

Consequently, the invention also concerns a rotating device comprising at least one blade (2) welded to a shroud (3), wherein :
- said at least one blade is provided with a profiled contact extremity (1), resulting in a reduced contact zone (6) able to contact the shroud (3);
- said shroud is provided with a recess (4), the recess comprising a recess contact zone (5) surrounded by a lateral access zone (7), the area of the recess contact zone (5)of the shroud being adapted to the reduced contact zone (6) of the blade, the blade reduced contact zone contacting the shroud recess contact zone along a resulting contact zone (8);
- filler metal is present in the lateral access zone (7) and a welding joint between the at least one blade and the shroud is formed along at least 10% of the area of the resulting contact zone.

In the rotating device according to the invention, the welding joint is formed along at least 10%, advantageously at least 25%, preferably at least 50%, more preferably at least 75%, particularly preferably at least 90%, most preferably essentially 100% of the area of the resulting contact zone.

In an advantageous embodiment, the rotating device according to the invention comprises a plurality ofblades and at least one reinforcement ring, welded to the blades.

The invention concerns consequently also a method for assembling a plurality of blades (2) to a shroud (3) of a rotating device, comprising:
- Providing a profiled contact extremity (1) in said blades, resulting in reduced contact zones (6) able to contact the shroud;
- Providing recesses (4) in the shroud, the recesses comprising a recess contact zone (5) surrounded by a lateral access zone (7), the area of the recess contact zone (5) being adapted to the reduced contact zone (6) of the blades;
- Introducing the profiled contact extremity of the blades into the recesses and contacting the reduced contact zones with the recess contact zones, in order to form resulting contact zones (8);
- Fillet welding together the blades and the shroud by introducing fused filler metal in the lateral access zones in conditions such that welding joints are formed along more than 10% of the resulting contact zones (8)
- Providing at least one reinforcement ring (10), circumventing the shroud and welded to the blades.

The at least one reinforcement ring connects each blade to the two neighbouring blades, which themselves are welded to the shroud. The ring allows thus to distribute more evenly the stress acting on the welding along the resulting contact zone, when the device is in operation.

The reinforcement ring is preferably welded to each of the blades. It is advantageously welded at a sufficient distance from the shroud, for instance at a distance of at least 1/10 of the length of the blade (this length being defined as its longest dimension). When the blades at welded to two shrouds, the reinforcement ring is preferably placed approximately at mid distance between the shrouds. In some instances, it is recommended that the rotating device comprises a plurality of reinforcement rings, for instance two concentric rings, one placed at the outer side of the blades and a second at the inner side (inner and outer being relative to the rotating axe).

The reinforcement ring is also preferably constructed in one piece. However, it can also be composed of several independent segments, each segment connecting together only a part of the blades.

Particular embodiments of the rotating device according to the invention are for instance impellers, wheels, propellers, particularly when they are submitted to demanding operating conditions. Impellers of liquid ring compressors comprising a rotating device according to the invention are particularly advantageous. The invention concerns also such liquid ring compressors comprising such impellers.

In liquid ring compressors, an externally driven impeller turns in a casing in which a gas and a liquid are injected. The centrifugal force generated by the impeller rotation creates a liquid ring at the periphery of the casing.

The impeller vanes dip into the liquid ring at periodically varying depth.

The volumes created between the blades of the impeller and the liquid periodically increase and decrease, as the impeller rotates.

Gas flows in and out of the machine though inlet and outlet ports. The inlet port is located at the beginning of the "increasing volume area"; the outlet port is located at the end of the "decreasing volume area". Liquid ring compressors are thus of the volumetric type.

During gas compression, the gas is always in close contact with the liquid and can exchange with it the heat generated by the compression, which results in more or less isothermal compressions.

Part of the liquid forming the liquid ring is ejected at the outlet port together with the gas. A liquid ring compressor must therefore be supplied with an uninterrupted flow of service liquid.

Vacuum pumps are also manufactured according to these principles.

Details of the invention will appear from the following description of the annexed figures. Same numerals indicate corresponding elements in the different figures.
Figure 1 illustrates a blade (2) having a profiled contact extremity (1) introduced in the recess (4) of a shroud (3), but wherein the reduced contact zone (6) of the blade does not contact the recess contact zone (5). The recess possess a lateral access zone (7) contacting it. In the particular embodiment which is illustrated, the angle between the edges of the profiled extremity of the blade and the edges of the lateral access zone is 50°. The angle between the profiled extremity and the faces of the blade is 20°. The angle between the edges of the lateral access zone and the top of the shroud is also 20°.

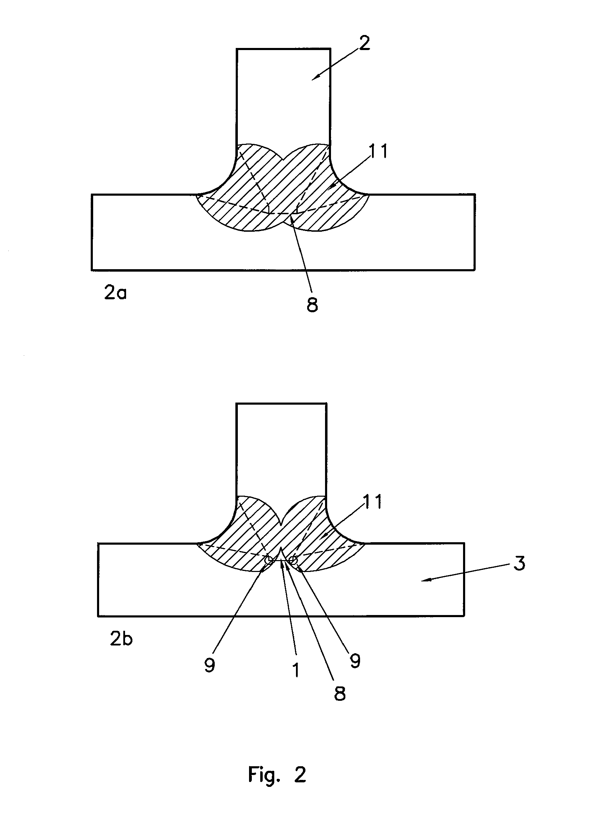

Figure 2 shows a blade (2) and a shroud (3) after contacting along the resulting contact zone (8) and formation of the welding joint (11). In figure 2a, the joint (11) is formed along 100% of the resulting contact zone (8). In figure 2b, the joint is formed only along the parts (9) of the resulting contact zone (8), amounting to approximately 50% of the area of the resulting contact zone.

In figure 3, a reinforcement ring (10) is welded on each of the blades (2), approximately at mid distance of the two shrouds (3) and at mid height of the blades. Figure 3 illustrate also an order (from a to f etc...) for the introduction of the filler metal at different parts of the blades.

### Examples

The following examples illustrate the invention.

### Example 1 (not according to the invention)

In example 1, blades of the impeller of a liquid ring compressor were welded to the shrouds of the device. The device was made out of stainless steel. The impeller had the structure shown on figure 3, but without the reinforcement ring. The welding was made according to the prior art (T joint without formation of a recess in the shrouds and without profiling the extremity of the blades. After 100 hours of functioning at a rotating speed of 750 RPM, 3.25 bars output delivery pressure of the compressed gas, 750 kW of motor power, the welding of some blades ruptured, which caused severe failure of the impeller.

### Example 2 (according to the invention)

In example 2, it was operated as in example 1, except that the blades were welded to the shrouds according to the invention, with formation of a recess in the shrouds and with profiling the extremity of the blades, as represented in figure 1. The penetration was quasi complete, with formation of a welding joint along at least 90% of the area of the resulting contact zone. A reinforcement ring, having a cross section diameter of 10 mm was additionally welded as represented in figure 3. Finally, the impeller was introduced into an oven which was subsequently heated to 620 °C, at a rate of 300°C/hour. The impeller remained for 3 hours at the 620°C temperature. The oven was thereafter let to cool down to 200°C, at a rate of approximately 50°C/hour. The impeller was then taken out of the oven and mounted on the compressor. After more than 5000 hours of service in the conditions of example 1, no damage was observed.

## Claims

1. Method for welding a blade (2) to a shroud (3) of a rotating device, comprising:
- Providing a profiled contact extremity (1) in said blade, resulting in a reduced contact zone (6) able to contact the shroud;
- Providing a recess (4) in the shroud, the recess comprising a recess contact zone (5) surrounded by a lateral access zone (7), the area of the recess contact zone (5) being adapted to the reduced contact zone (6) of the blade;
- Introducing the profiled contact extremity of the blade into the recess and contacting the reduced contact zone with the recess contact zone, in order to form a resulting contact zone (8);
- Fillet welding together the blade and the shroud by introducing fused filler metal in the lateral access zone in conditions such that a welding joint is formed along at least 10% of the area of the resulting contact zone (8).

2. Method according to claim 1 wherein the joint is formed along at least 25% of the area of the resulting contact zone (8).

3. Method according to any of the preceding claims, wherein the joint is formed along at least 50% of the area of the resulting contact zone (8).

4. Method according to any of the preceding claims, wherein the joint is further subjected to a thermal treatment at a temperature of at least 500°C with a subsequent cooling at a rate lower than 100°C per hour.

5. Method according to the preceding claim, wherein the joint is warmed up to the thermal treatment temperature at a speed lower than 500°C per hour.

6. Rotating device comprising at least one blade (2) welded to a shroud (3), wherein :
- said at least one blade is provided with a profiled contact extremity (1), resulting in a reduced contact zone (6) able to contact the shroud (3);
- said shroud is provided with a recess (4), the recess comprising a recess contact zone (5) surrounded by a lateral access zone (7), the area of the recess contact zone (5)of the shroud being adapted to the reduced contact zone (6) of the blade, the blade reduced contact zone contacting the shroud recess contact zone along a resulting contact zone (8);
- filler metal is present in the lateral access zone (7) and a welding joint between the at least one blade and the shroud is formed along at least 10% of the area of the resulting contact zone.

7. Rotating device according to the preceding claim, wherein the welding joint is formed along at least 50% of the resulting contact zone.

8. Rotating device according to claims 6 or 7, comprising a plurality of blades and at least one reinforcement ring (10), circumventing the shroud and welded to the blades.

9. Liquid ring compressor comprising a rotating device according to any of claims 6 to 8.
